# FASCICULE DE BREVET EUROPEEN

(11) **EP 1 996 527 B1**
(45) Date de publication et mention de la délivrance du brevet: **22.03.2017**
(21) Numéro de dépôt: 07734710.2
(22) Date de dépôt: 27.02.2007
(51) Int. Cl.: C04B 28/14, C04B 24/38, C04B 24/42, C04B 111/27

(54) **PROCÉDÉ D'HYDROFUGATION D'UN PRODUIT À BASE DE GYPSE FORMÉ À PARTIR D'UNE COMPOSITION À BASE DE PLÂTRE**
VERFAHREN ZUR WASSERABWEISENDEN AUSRÜSTUNG EINES AUS EINER ZUSAMMENSETZUNG AUF STUCKGIPSBASIS GEBILDETEN PRODUKTS AUF GIPSBASIS
METHOD OF IMPARTING WATER REPELLENCY TO A GYPSUM-BASED PRODUCT FORMED FROM A PLASTER-BASED COMPOSITION

(30) Priorité: 28.02.2006 FR 0601761
(43) Date de publication de la demande: 03.12.2008
(73) Titulaire: BPB Limited, Binley Business Park Coventry CV3 2TT (GB)
(72) Inventeur: GEERAERT, Emmanuel, B-2950 Kapellen (BE)
(74) Mandataire: Santarelli
(86) Numéro de dépôt international: PCT/IB2007/001417
(87) Numéro de publication internationale: WO 2007/099455

(56) Documents cités:
- EP-A2- 0 117 431
- WO-A-99/50200
- DE-A1- 4 128 424
- DE-A1- 10 220 659
- FR-A1- 2 548 171
- US-A1- 2007 022 913

## Description

L'invention concerne un procédé d'hydrofugation d'un produit à base de gypse formé à partir d'une composition à base de plâtre, une composition hydrofugée à base de plâtre, ainsi que l'utilisation d'une telle composition pour la fabrication d'objets moulés ou extrudés, comme les carreaux de plâtre ou les plaques de plâtre.

La matière première, le gypse, qu'il soit d'origine naturelle ou synthétique, est un sulfate de calcium di-hydraté. Ce gypse, sous forme de poudre, subit d'abord une cuisson qui le déshydrate en sulfate de calcium semi-hydraté ou en sulfate de calcium anhydre ou en un mélange de ces deux formes. Ce produit déshydraté est appelé plâtre. En mélangeant ce plâtre avec de l'eau on obtient une gâchée qui se solidifie en reformant du gypse (sulfate de calcium di-hydraté). Afin d'obtenir une gâchée apte à être coulée pour permettre la mise en forme du produit désiré, on emploie un excès d'eau dans la gâchée. Pendant le séchage du produit cette eau excédentaire est évaporée, ce qui laisse des micropores dans le produit. Cette porosité est responsable de la reprise en eau du produit pendant, par exemple, une immersion. La réduction de cette reprise en eau du produit fait l'objet de la présente invention.

Le cas échéant, on peut ajouter à la gâchée des additifs appropriés comme des accélérateurs de prise, des retardateurs de prise, des produits d'allégement, des modificateurs de rhéologie, des charges, des fibres, d'autres additifs fonctionnels comme l'amidon, l'huile de silicone, la cire ou tout autre additif usuel dans le domaine.

Le gypse étant un produit poreux et hydrophile, il est susceptible de reprendre de l'eau lorsqu'il se trouve en présence d'eau.

L'absorption d'eau dans des produits à base de gypse formés à partir d'une composition à base de plâtre se traduit notamment par une diminution des résistances mécaniques et une possibilité de déformation de ces objets sous contrainte.

De ce fait, il est recherché de diminuer la reprise en eau du gypse, afin de conférer aux produits à base de gypse des propriétés de stabilité mécanique compatibles avec leur mise en oeuvre.

L'utilisation d'organosilicones pour conférer des propriétés d'hydrofugation en masse à des compositions à base de gypse est décrite, par exemple, dans les brevets EP 0 171 018 et US 5 814 411 où l'agent hydrofugeant est introduit avec de la mousse.

Un procédé d'hydrofugation du plâtre par ajout d'un alkylhydrogénopolysiloxane et de gomme guar est décrit dans la demande WO99/50200.

La demande DE 102 20659 décrit des compositions à base de gypse comprenant des siloxanes et des dérivés éthérifiés d'amidon.

La demande DE 4128424 décrit un procédé de fabrication de plaques moulées hydrofugées, à base de plâtre poreux, dans lequel des alkyl-hydropolysiloxanes peuvent être ajoutés à des courants partiels contenant des additifs usuels.

Les alkyl-hydropolysiloxanes peuvent également être ajoutés à un courant partiel qui contient de l'amidon gélatinisé, aucune teneur du composé alkyl-hydropolysiloxane par rapport à la poudre de plâtre n'étant indiquée.

On a maintenant trouvé que l'ajout d'un composé comprenant un polysiloxane, et d'au moins un composé comprenant un amidon prégélifié à une composition à base de plâtre permet de conférer à un produit à base de gypse préparé à partir de cette composition, des propriétés d'hydrofugation élevées, c'est à dire de réduire significativement son absorption d'eau en comparaison avec une formulation ne contenant pas d'amidon prégélifié.

De manière surprenante, on a en effet trouvé que l'ajout d'amidon prégélifié permet de diminuer significativement la quantité de silicone nécessaire pour obtenir cette réduction d'absorption d'eau, alors que ce n'est pas le cas si on utilise de l'amidon natif. En effet, on a constaté que, lors de la fabrication d'une plaque de plâtre, l'amidon natif que l'on ajoute traditionnellement dans la gâchée, qui est un amidon natif partiellement hydrolysé, n'a pas d'influence majeure sur la réduction d'absorption d'eau de la plaque.

Avantageusement, on a également trouvé que l'ajout d'amidon prégélifié permet d'obtenir des résultats en termes d'hydrofugation équivalents à ceux obtenus par l'addition de guar, voire supérieurs, tout en permettant d'optimiser les coûts de production.

L'invention a donc pour objet, selon un premier aspect, un procédé d'hydrofugation d'un produit à base de gypse formé à partir d'une composition à base de plâtre, caractérisé en ce que l'on ajoute à ladite composition au moins un composé comprenant un polysiloxane et au moins un composé comprenant un amidon prégélifié, ledit composé comprenant un polysiloxane étant présent dans la composition à raison de 0,01% à 1,5% en poids par rapport à la poudre de plâtre.

Selon un aspect préféré, ledit polysiloxane peut être choisi, par exemple, parmi les hydrogénopolysiloxanes linéaires ou cycliques, de formules (I) ou (II) ci-dessous, 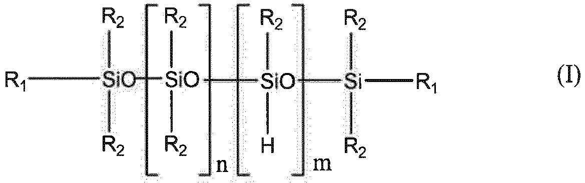 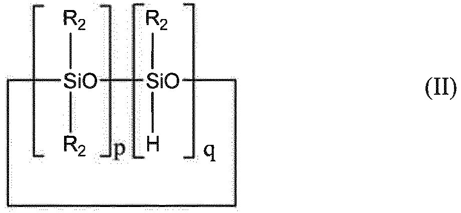 ou leurs mélanges,
dans lesquelles :
- R₁ et R₂, identiques ou différents, représentent indépendamment
   un radical alkyle en C₁-C₈, linéaire ou ramifié ;
   un radical alcoxy en C₁-C₄ ; un radical cycloalkyle en C₃-C₁₀ ;
   un radical aryle monocyclique, bicyclique ou tricyclique en C₆-C₁₄, non substitué ou substitué par au moins un radical alkyle en C₁-C₄ ou un radical alcényle en C₂-C₁₂;
   un radical aralkyle monocyclique ou bicyclique dans lequel le(s) groupe(s) aryle(s) est(sont) en C₆-C₁₀ et le groupe alkyle est en C₁-C₄, non substitué ou substitué par au moins un radical alkyle en C₁-C₄ ou un radical alcényle en C₂-C₁₂;
   un radical hétéroaryle monocyclique ou bicyclique en C₅-C₁₂ comprenant au moins un hétéroatome choisi parmi O, N et S,
   un radical alcényle en C₂-C₁₂;
   ou un radical alcynyle en C₂-C₁₂ ;
- n, m, p et q sont des nombres entiers compris entre 0 et 200, avec 1 < n+m < 200 et 3 < p+q < 10.

De préférence, ledit polysiloxane possède au moins un atome d'hydrogène libre lié à un atome de silicium, par molécule.

Des exemples non limitatifs de radicaux et groupements mentionnés ci-dessus dans la définition de R₁ et R₂ sont indiqués ci-après.

Par « radical alkyle en C₁-C₈, linéaire ou ramifié », on entend, par exemple, méthyl, éthyl, propyl, isopropyl, n-butyl, sec-butyl, *tert*-butyl, isobutyl, pentyl, hexyl, octyl.

Par « radical aloxy en C₁-C₄ », on entend, par exemple, un groupe linéaire ou ramifié tel que méthoxy, éthoxy, propoxy, isopropoxy, n-butoxy, sec-butoxy, *tert*-butoxy ou isobutoxy.

Par « radical cycloalkyle en C₃-C₁₀ » on entend, par exemple, un groupe cyclopropyle, cyclobutyle, cyclopentyle ou cyclohexyle.

Par « radical aryle monocyclique, bicyclique ou tricylique en C₆-C₁₄», on entend, par exemple, un groupe phényle, biphényle, naphtyle ou anthracényle, lesdits groupes étant substitués ou non substitués.

Par « radical aralkyle monocyclique ou bicyclique dans lequel le(s) groupe(s) aryle(s) est (sont) en C₆-C₁₀ et le groupe alkyle est en C₁-C₄», on entend, par exemple, un groupe benzyle, phényléthyle, phénylpropyle, triphénylméthyle ou naphtylméthyle, lesdits groupes étant substitués ou non substitués.

Par « radical hétéroaryle monocyclique ou bicyclique en C₅-C₁₂ comprenant au moins un hétéroatome choisi parmi O, N et S », on entend, par exemple, un groupe pyrrolyle, furanyle, thiényle, pyridyle, indolyle, benzopyrrolyle, benzofuranyle, benzothiophényle, benzothiényle, benzimidazolyle, benzopurinyle, quinoléyle, isoquinoléyle, imidazolyle, thiazolyle, thiadiazolyle, oxazolyle, oxadiazolyle pyrazinyle, pyrimidyle, pyridazinyle ou purinyle.

Par « radical alcényle en C₂-C₁₂ », on entend un radical hydrocarboné comportant une ou plusieurs double(s) liaison(s), par exemple un groupe vinyle, allyle ou crotonyle.

Par « radical alcynyle en C₂-C₁₂ » on entend un radical hydrocarboné comportant une ou plusieurs triple(s) liaison(s), par exemple un groupe éthynyle, propargyle, butynyle, pentynyle ou hexynyle.

Des polysiloxanes préférés aux fins de l'invention sont, par exemple, le polyméthylhydrogénosiloxane et le polyméthylvinylsiloxane.

On utilisera de préférence le composé comprenant un polysiloxane sous forme d'une huile ou d'une émulsion huile dans eau.

Ledit composé comprenant un polysiloxane est présent dans la composition à raison de 0,01% à 1,5% en poids par rapport à la poudre de plâtre, en particulier à raison de 0,05% à 0,25% en poids par rapport à la poudre de plâtre.

Le composé comprenant un amidon prégélifié peut provenir, par exemple, de la prégélification d'amidon de maïs, d'amidon de blé, d'amidon de pomme de terre, d'amidon de patate douce, d'amidon de tapioca, d'amidon de manioc, d'amidon de riz, d'amidon de maïs cireux ou de leurs mélanges, ou des farines les contenant.

Par « amidon prégélifié », on entend un amidon ayant subi un traitement destiné à le rendre soluble ou apte à être dispersé dans un liquide sans chauffage.

Après un tel traitement, on obtient un amidon dit « prégélifié » ou « prégélatinisé », les deux termes pouvant être utilisés indifféremment au sens de la présente description.

Le traitement de prégélification peut être effectué en chauffant ledit composé au dessus de la température de gélification de l'amidon, selon des techniques connues.

L'amidon peut également être réticulé à l'aide d'un agent de réticulation ou encore sous l'effet d'un rayonnement ionisant, selon des techniques usuelles.

Le composé comprenant un amidon prégélifié peut être sous forme de poudre ou de solution dans l'eau.

De préférence, le composé comprenant un amidon prégélifié est présent dans la composition à raison de 0,025% à 2% en poids par rapport à la poudre de plâtre, en particulier à raison de 0,10% à 1% par rapport à la poudre de plâtre.

La composition de plâtre à laquelle sont ajoutés le composé comprenant un polysiloxane et le composé comprenant un dérivé d'amidon prégélifié peut également contenir au moins un additif habituellement utilisé dans le domaine, tel que, par exemple un agent fluidifiant ou dispersant, un agent moussant, un agent retardateur de prise, un agent accélérateur de prise, un agent anti-retrait à haute température, un agent liant, un amidon natif, un agent adhésif, un inhibiteur de recalcination, de la cire, un agent épaississant, un agent antiaffaissement, un agent autonivelant, un agent biocide, un agent d'ajustement du pH, un colorant, un matériau de renforcement, un agent retardateur de flamme ou une charge.

Selon un aspect ultérieur, l'invention concerne également un procédé d'hydrofugation tel que défini ci-dessus, comprenant une étape consistant à préparer un mélange à base de plâtre, d'eau , d'au moins un composé comprenant un polysiloxane et d'au moins un composé comprenant un amidon prégélifié, lesdits composés étant tels que définis plus haut.

L'invention concerne également une composition hydrofugée à base de plâtre, comprenant au moins un composé comprenant un polysiloxane et au moins un composé comprenant un amidon prégélifié tels que définis plus haut.

Le composé comprenant un polysiloxane étant présent dans la composition à raison de 0,01 % à 1,5% en poids par rapport à la poudre de plâtre.

Selon un aspect ultérieur, l"invention concerne également l'utilisation d'une telle composition pour la fabrication d'un objet moulé ou extrudé, par exemple, pour la fabrication d'un carreau de plâtre ou d'une plaque de plâtre, ainsi que les objets moulés ou extrudés, par exemple, les carreaux ou les plaques comprenant une telle composition.

En effet, le procédé d'hydrofugation et la composition hydrofugée selon l'invention permettent d'obtenir des produits à base de gypse dont les propriétés d'hydrofugation satisfont les normes en vigueur.

A cet égard, on se référera à la norme NF EN 520 qui définit respectivement les classes d'absorption d'eau H1, H2 et H3 pour une absorption totale d'eau égale ou inférieure à 5% (classe H1), égale ou inférieure à 10% (classe H2), et égale ou inférieure 25% (classe H3), après 2 h d'immersion dans l'eau.

En particulier, le procédé d'hydrofugation et la composition hydrofugée selon l'invention peuvent être utilisées pour la fabrication de plaques dites « à absorption réduite d'eau » de classe H1, H2 ou H3 selon la norme NF EN 520, ou tout autre type de plaque à base de gypse et dans laquelle une réduction de l'eau en masse ou une réduction de l'eau surfacique est désirée, telles que, par exemple, les plaques renforcées par des fibres (par exemple, fibres synthétiques, fibres cellulosiques, fibres de verre, fibres minérales) ou par des grilles, ou des voiles, ou par une combinaison de ces différents éléments de renforcement.

De tels types de plaques sont décrits, par exemple, dans les pré-normes Pr NF EN 15283-1 (plaques de plâtre armées d'un tissu) et Pr NF 15283-2 (plaques de plâtre fibrées).

L'exemple ci-dessous illustre l'invention de manière non limitative.

### Exemple 1 :

### 1) préparation de plaquettes

On prépare un mélange de poudres constitué de (quantités exprimées pour 1 kg de plâtre) :
- 1 kg de plâtre (à base de gypse naturel)
- 4,25 g de poudre d'amidon prégélifié ou de guar
- 4,7 g d'amidon (Collofilm 121, Amylum, Tate & Lyle)
- 0,05 g d'agent retardateur de prise (PlastRetard, SICIT)
que l'on ajoute à un mélange liquide composé de 740 g d"eau, de 2,9 g d'agent fluidifiant (Proxmat M115-40, Synthron) et d'huile de silicone (H68, Rhodia, France) (voir quantités dans le tableau 1 ci-dessous).

On mélange à l'aide d'un disque disperseur de 8 cm de diamètre à 1500-2500 tours/min.

On ajoute 52 g d'une mousse, préparée à partir de 2 g d'agent moussant (Millifoam, Huntsman) dans 200 ml d'eau, durant le malaxage à l'aide d'un disque disperseur de 8 cm de diamètre à 1000 tours/min pendant 1 à 1,5 min.

On remplit avec ce mélange des moules en silicone de 6 plaquettes de dimension voulue. Au début de la prise, on racle la surface des moules pour éliminer l'excès de gâchée. On procède au démoulage après durcissement complet.

On obtient ainsi des plaquettes de gypse de dimension 150 x 75 x 12 mm, qui sont séchées de manière accélérée au four à micro-ondes pendant environ 25 min jusqu'à une humidité résiduelle d'environ 3%, puis soumises à un séchage jusqu'à poids constant en étuve à 40°C.

### 2) mesure de la reprise en eau

Les mesures de reprise en eau par immersion ont été réalisées selon la norme NF EN 520.

Brièvement, les plaquettes sont immergées dans l'eau (23 ± 2°C) pendant 2h ± 2 min et on détermine l'augmentation de leur masse, en pourcentage.

Les résultats sont rapportés dans le tableau 1 ci-dessous.

**Tableau 1**

| | Silicone (g/kg de plâtre) | Amidon prégélifié (g/ kg de plâtre) | Guar (g /kg de plâtre) | Reprise en eau (% massique) |
|---|---|---|---|---|
| Formulation comparative 1 silicone seul | 4,4 | - | - | 4,9 |
| Formulation 2 avec amidon prégélifié (Solvitose H8, AVEBE) | 1,7 | 4,25 | - | 1,5 |
| Formulation 3 avec amidon prégélifié (Paselli WA, AVEBE) | 1,7 | 4,25 | - | 1,5 |
| Formulation comparative 4 avec guar (Rhoximat 3407, RHODIA) | 1,7 | - | 4,25 | 1,6 |

Les résultats montrent que les formulations 2 et 3 selon l'invention, qui contiennent du silicone et de l'amidon prégélifié, présentent une reprise en eau inférieure à celle obtenue avec la formulation comparative 1, contenant du silicone seul en quantité plus importante.

De plus, elles présentent une reprise en eau inférieure à la formulation comparative 4, qui contient la même quantité de silicone, mais contient du guar à la place de l'amidon prégélifié.

## Revendications

1. Procédé d'hydrofugation d'un produit à base de gypse formé à partir d'une composition à base de plâtre, **caractérisé en ce que** l'on ajoute à ladite composition au moins un composé comprenant un polysiloxane et au moins un composé comprenant un amidon prégélifié, ledit composé comprenant un polysiloxane étant présent dans la composition à raison de 0,01% à 1,5% en poids par rapport à la poudre de plâtre.

2. Procédé selon la revendication 1, **caractérisé en ce que** ledit polysiloxane est choisi parmi les hydrogénopolysiloxanes linéaires ou cycliques, de formules (I) ou (II) ci-dessous, 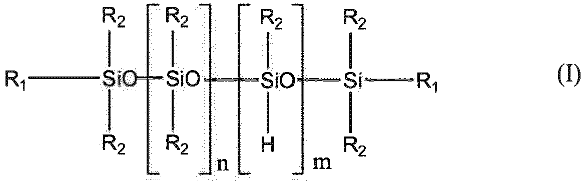 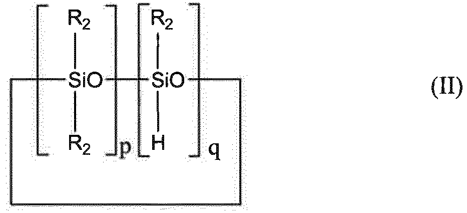 ou leurs mélanges,
dans lesquelles :
- R₁ et R₂, identiques ou différents, représentent indépendamment
un radical alkyle en C₁-C₈, linéaire ou ramifié ;
un radical alcoxy en C₁-C₄ ; un radical cycloalkyle en C₃-C₁₀ ;
un radical aryle monocyclique, bicyclique ou tricyclique en C₆-C₁₄, non substitué ou substitué par au moins un radical alkyle en C₁-C₄ ou un radical alcényle en C₂-C₁₂;
un radical aralkyle monocyclique ou bicyclique dans lequel le(s) groupe(s) aryle(s) est(sont) en C₆-C₁₀ et le groupe alkyle est en C₁-C₄, non substitué ou substitué par au moins un radical alkyle en C₁-C₄ ou un radical alcényle en C₂-C₁₂;
un radical hétéroaryle monocyclique ou bicyclique en C₅-C₁₂ comprenant au moins un hétéroatome choisi parmi O, N et S,
un radical alcényle en C₂-C₁₂;
ou un radical alcynyle en C₂-C₁₂ ;
- n, m, p et q sont des nombres entiers compris entre 0 et 200, avec 1 < n+m < 200 et 3 < p+q < 10.

3. Procédé selon l'une des revendications 1 ou 2, **caractérisé en ce que** le composé comprenant un polysiloxane est sous forme d'une huile ou d'une émulsion huile dans eau.

4. Procédé selon la revendication 3, **caractérisé en ce que** ledit composé comprenant un polysiloxane est présent dans la composition à raison de 0,05% à 0,25% en poids par rapport à la poudre de plâtre.

5. Procédé selon l'une quelconque des revendications 1 à 4, **caractérisé en ce que** ledit composé comprenant un amidon prégélifié provient de la prégélification d'amidon de maïs, d'amidon de blé, d'amidon de pomme de terre, d'amidon de patate douce, d'amidon de tapioca, d'amidon de manioc, d'amidon de riz, d'amidon de maïs cireux ou leurs mélanges, ou de farines les contenant.

6. Procédé selon l'une quelconque des revendications 1 à 5, **caractérisé en ce que** ledit composé comprenant un amidon prégélifié est présent dans la composition à raison de 0,025% à 2% en poids par rapport à la poudre de plâtre.

7. Procédé selon la revendication 6, **caractérisé en ce que** ledit composé comprenant un amidon prégélifié est présent dans la composition à raison de 0,10% à 1% par rapport à la poudre de plâtre.

8. Procédé selon l'une quelconque des revendications 1 à 7 , **caractérisé en ce qu'**il comprend une étape consistant à préparer un mélange à base de plâtre, d'eau , d'au moins un composé comprenant un polysiloxane, et d'au moins un composé comprenant un amidon prégélifié, lesdits composés étant tels que définis dans l'une des revendications 1 à 7, de manière à ajouter au moins un composé comprenant un polysiloxane et au moins un composé comprenant un amidon prégélifié à ladite composition à base de plâtre.

9. Procédé selon l'une quelconque des revendications 1 à 8, **caractérisé en ce que** la composition à base de plâtre comprend en outre au moins un additif choisi parmi un agent fluidifiant ou dispersant, un agent moussant, un agent retardateur de prise, un agent accélérateur de prise, un agent anti-retrait à haute température, un agent liant, un amidon natif, un agent adhésif, un inhibiteur de recalcination, de la cire, un agent épaississant, un agent antiaffaissement, un agent autonivelant, un agent biocide, un agent d'ajustement du pH, un colorant, un matériau de renforcement, un agent retardateur de flamme et une charge.

10. Composition hydrofugée à base de plâtre, **caractérisée en ce qu'**elle comprend au moins un composé comprenant un polysiloxane tel que défini dans l'une quelconque des revendications 1 à 4, et au moins un composé comprenant un amidon prégélifié tel que définis dans l'une quelconque des revendications 1 ou 5 à 7, ledit composé comprenant un polysiloxane étant présent dans la composition à raison de 0,01% à 1,5% en poids par rapport à la poudre de plâtre.

11. Composition selon la revendication 10, **caractérisée en ce que** ledit composé comprenant un polysiloxane est choisi parmi les hydrogénopolysiloxanes linéaires ou cycliques, de formules (I) ou (II) ci-dessous, 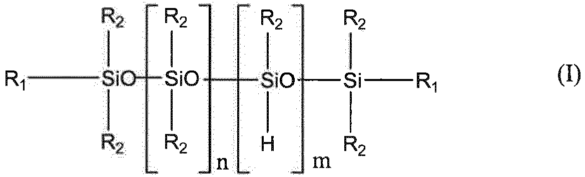 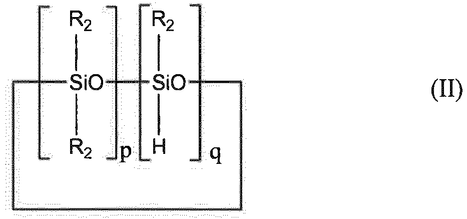 ou leurs mélanges,
dans lesquelles :
- R₁ et R₂, identiques ou différents, représentent indépendamment un radical alkyle en C₁-C₈, linéaire ou ramifié ;
un radical alcoxy en C₁-C₄; un radical cycloalkyle en C₃-C₁₀ ;
un radical aryle monocyclique, bicyclique ou tricyclique en C₆-C₁₄, non substitué ou substitué par au moins un radical alkyle en C₁-C₄ ou un radical alcényle en C₂-C₁₂;
un radical aralkyle monocyclique ou bicyclique dans lequel le(s) groupe(s) aryle(s) est(sont) en C₆-C₁₀ et le groupe alkyle est en C₁-C₄, non substitué ou substitué par au moins un radical alkyle en C₁-C₄ ou un radical alcényle en C₂-C₁₂;
un radical hétéroaryle monocyclique ou bicyclique en C₅-C₁₂ comprenant au moins un hétéroatome choisi parmi O, N et S,
un radical alcényle en C₂-C₁₂;
ou un radical alcynyle en C₂-C₁₂ ;
- n, m, p et q sont des nombres entiers compris entre 0 et 200, avec 1 < n+m < 200 et 3 < p+q < 10,
et au moins un composé comprenant un amidon prégélifié.

12. Composition selon l'une des revendications 10 ou 11, **caractérisée en ce que** le composé comprenant un amidon prégélifié est présent dans la composition à raison de 0,025% à 2% en poids par rapport à la poudre de plâtre.

13. Utilisation d'une composition selon l'une quelconque des revendications 10 à 12, pour la fabrication d'un objet moulé ou extrudé, d'un carreau de plâtre ou d'une plaque de plâtre.

14. Objet moulé, carreau ou plaque comprenant une composition hydrofugée à base de plâtre, dans lequel ladite composition comprend au moins un composé comprenant un polysiloxane et au moins un composé comprenant un amidon prégélifié tels que définis dans l'une des revendications 1 à 7.

## Patentansprüche

1. Verfahren zur wasserfesten Ausrüstung eines ausgehend von einem aus einer stuckgipsbasierten Zusammensetzung gebildeten Produkts auf Gipsbasis, **dadurch gekennzeichnet, dass** der Zusammensetzung zumindest eine Verbindung, die Polysiloxan umfasst, und zumindest eine Verbindung, die im Voraus gelifizierte Stärke umfasst, hinzugefügt wird, wobei die Verbindung, die Polysiloxan umfasst, in der Zusammensetzung in einem Verhältnis von 0,01 Gewichts-% bis 1,5 Gewichts-% bezogen auf das Stuckgipspulver vorhanden ist.

2. Verfahren nach Anspruch 1, **dadurch gekennzeichnet, dass** das Polysiloxan aus linearen oder cyclischen Hydrogenpolysiloxanen mit den Formeln (I) oder (II) unten 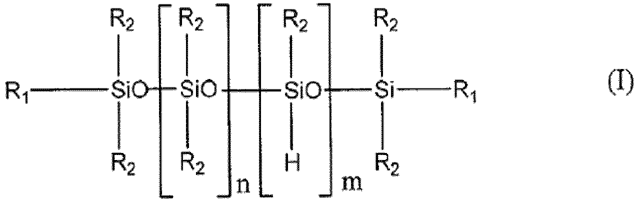 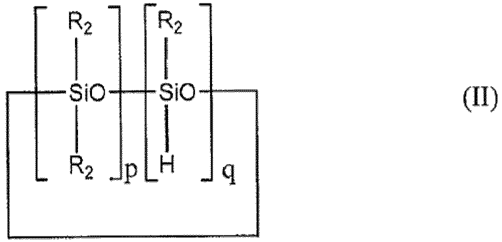 oder deren Gemischen ausgewählt wird,
wobei:
- R₁ und R₂, die gleich oder verschieden sind, unabhängig einen linearen oder verzweigten C₁-C₈-Alkylrest;
einen C₁-C₄-Alkoxyrest; einen C₃-C₁₀-Cycloalkylrest;
einen monocyclischen, bicyclischen oder tricyclischen C₆-C₁₄-Arylrest, nicht-substituiert oder mit mindestens einem C₁-C₄-Alkylrest oder einem C₂-C₁₂-Alkenylrest substituiert;
einen monocyclischen oder bicyclischen Aralkylrest, in welchem die Arylgruppe(n) C₆-C₁₀ ist (sind) und die Alkylgruppe C₁-C₄, nicht-substituiert oder mit zumindest einem C₁-C₄-Alkylrest oder einem C₂-C₁₂-Alkenylrest substituiert, ist;
einen monocyclischen oder bicyclischen C₅-C₁₂-Heteroarylrest, der zumindest ein Heteroatom ausgewählt aus O, N und S umfasst,
einen C₂-C₁₂-Alkenylrest;
oder einen C₂-C₁₂-Alkinylrest darstellen;
- n, m, p und q ganze Zahlen zwischen 0 und 200 sind, wobei 1 < n + m < 200 und 3 < p + q < 10.

3. Verfahren nach einem der Ansprüche 1 oder 2, **dadurch gekennzeichnet, dass** die Verbindung Polysiloxan in Form eines Öls oder einer Öl-in-Wasser-Emulsion umfasst.

4. Verfahren nach Anspruch 3, **dadurch gekennzeichnet, dass** die Verbindung, die Polysiloxan umfasst, in der Zusammensetzung in einem Verhältnis von 0,05 Gewichts-% bis 0,25 Gewichts-% bezogen auf das Stuckgipspulver vorliegt.

5. Verfahren nach einem der Ansprüche 1 bis 4, **dadurch gekennzeichnet, dass** die Verbindung, die im Voraus gelifizierte Stärke umfasst, aus der Vorgelifizierung von Maisstärke, Weizenstärke, Kartoffelstärke, Süßkartoffelstärke, Tapiokastärke, Maniokstärke, Reisstärke, Wachsmaisstärke oder deren Gemischen oder diese enthaltenden Mehlen resultiert.

6. Verfahren nach einem der Ansprüche 1 bis 5, **dadurch gekennzeichnet, dass** die Verbindung, die im Voraus gelifizierte Stärke umfasst, in der Zusammensetzung in einem Verhältnis von 0,025 Gewichts-% bis 2 Gewichts-% bezogen auf das Stuckgipspulver vorliegt.

7. Verfahren nach Anspruch 6, **dadurch gekennzeichnet, dass** die Verbindung, die im Voraus gelifizierte Stärke umfasst, in der Zusammensetzung in einem Verhältnis von 0,10 Gewichts-% bis 1 Gewichts-% bezogen auf das Stuckgipspulver vorliegt.

8. Verfahren nach einem der Ansprüche 1 bis 7, **dadurch gekennzeichnet, dass** es einen Schritt umfasst, bestehend aus dem Zubereiten eines Gemisches auf Stuckgipsbasis, Wasser, zumindest einer Verbindung, die Polysiloxan umfasst, und zumindest einer Verbindung, die im Voraus gelifizierte Stärke umfasst, wobei die Verbindungen wie in den Ansprüchen 1 bis 7 definiert sind, durch Zugeben zumindest einer Verbindung, die Polysiloxan umfasst, und zumindest einer Verbindung, die im Voraus gelifizierte Stärke umfasst, zu der Zusammensetzung auf Stuckgipsbasis.

9. Verfahren nach einem der Ansprüche 1 bis 8, **dadurch gekennzeichnet, dass** die Zusammensetzung auf Stuckgipsbasis darüber hinaus zumindest ein Additiv umfasst, ausgewählt aus Verflüssigungsmittel oder Dispergiermittel, Schaummittel, Abbindeverzögerer, Abbindebeschleuniger, Hochtemperatur-Antischrumpfungsmittel, Bindemittel, nativer Stärke, Klebemittel, Rekalzinierungsinhibitor, Wachs, Verdickungsmittel, Antisetzungsmittel, Selbstnivellierungsmittel, Biozid, pH-Einstellmittel, Farbmittel, Verstärkungsmaterial, Flammschutzmittel und Füllstoff.

10. Wasserfest ausgerüstete Zusammensetzung auf Stuckgipsbasis, **dadurch gekennzeichnet, dass** sie zumindest eine Verbindung, die Polysiloxan nach einem der Ansprüche 1 bis 4 umfasst, und zumindest eine Verbindung umfasst, die im Voraus gelifizierte Stärke nach den Ansprüchen 1 oder 5 bis 7 umfasst, wobei die Verbindung, die Polysiloxan umfasst, in der Zusammensetzung in einem Verhältnis von 0,01 Gewichts-% bis 1,5 Gewichts-% bezogen auf das Stuckgipspulver vorliegt.

11. Zusammensetzung nach Anspruch 10, **dadurch gekennzeichnet, dass** die Verbindung, die Polysiloxan umfasst, ausgewählt ist aus linearen oder cyclischen Hydrogenpolysiloxanen mit den Formeln (I) oder (II) unten 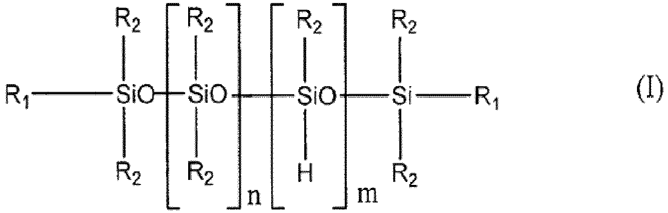 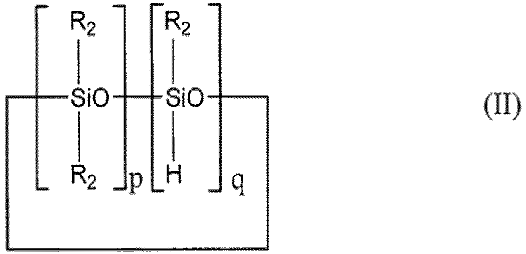 oder deren Gemischen,
wobei:
- R₁ und R₂, die gleich oder verschieden sind, unabhängig einen linearen oder verzweigten C₁-C₈-Alkylrest;
einen C₁-C₄-Alkoxyrest; einen C₃-C₁₀-Cycloalkylrest;
einen monocyclischen, bicyclischen oder tricyclischen C₆-C₁₄-Arylrest, nicht-substituiert oder mit zumindest einem C₁-C₄-Alkylrest oder einem C₂-C₁₂-Alkenyl-Rest substituiert;
einen monocyclischen oder bicyclischen Aralkylrest, in welchem die Arylgruppe(n) C₆-C₁₀ ist (sind) und die Alkylgruppe C₁-C₄, nicht-substituiert oder mit zumindest einem C₁-C₄-Alkylrest oder einem C₂-C₁₂-Alkenylrest substituiert, ist;
einen monocyclischen oder bicyclischen C₅-C₁₂-Heteroarylrest, der zumindest ein Heteroatom ausgewählt aus O, N und S umfasst,
einen C₂-C₁₂-Alkenylrest;
oder einen C₂-C₁₂-Alkinylrest darstellen;
- n, m, p und q ganze Zahlen zwischen 0 und 200 sind, wobei 1 < n + m < 200 und 3 < p + q < 10,
und zumindest einer Verbindung, die im Voraus gelifizierte Stärke umfasst.

12. Zusammensetzung nach Anspruch 10 oder 11, **dadurch gekennzeichnet, dass** die Verbindung im Voraus gelifizierte Stärke umfasst, die in der Zusammensetzung in einem Verhältnis von 0,025 Gewichts-% bis 2 Gewichts-% bezogen auf das Stuckgipspulver vorliegt.

13. Verwendung einer Zusammensetzung nach einem der Ansprüche 10 bis 12 zur Herstellung eines / einer geformten oder extrudierten Gegenstandes, Gipsfliese oder Gipskartonplatte.

14. Geformter / geformte Gegenstand, Fliese oder Platte, der / die eine wasserfest ausgerüstete Zusammensetzung auf Stuckgipsbasis umfasst, worin die Zusammensetzung zumindest eine Verbindung, die Polysiloxan umfasst, und zumindest eine Verbindung, die im Voraus gelifizierte Stärke umfasst, nach den Ansprüchen 1 bis 7 umfasst.

## Claims

1. A method for waterproofing a gypsum-based product formed from a plaster-based composition, **characterized by** adding at least one compound comprising a polysiloxane and at least one compound comprising a pregelified starch to said composition, wherein said compound comprising a polysiloxane is present in the composition in a ratio of 0.01 % to 1.5% by weight to plaster powder.

2. The method according to claim 1, **characterized in that** said polysiloxane is chosen from linear or cyclic hydrogenopolysiloxanes of formulae (I) or (II) below, 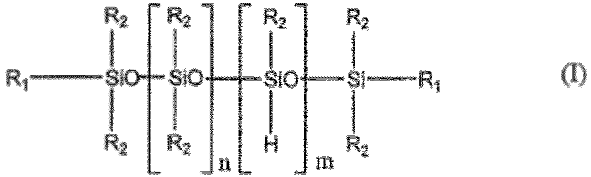 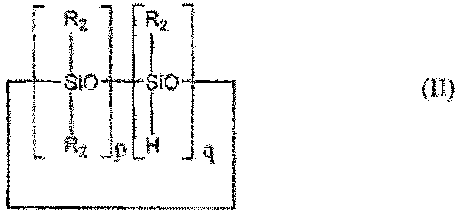 or mixtures of these, in which:
- R₁ and R₂, identical or different, represent independently a linear or branched C₁-C₈ alkyl radical;
a C₁-C₄ alkoxy radical; a C₃-C₁₀ cycloalkyl radical;
a C₆-C₁₄ monocyclic, bicyclic or tricyclic aryl radical, non-substituted or substituted by at least one C₁-C₄ alkyl radical or a C₂-C₁₂ alkenyl radical;
a monocyclic or bicyclic aralkyl radical in which the aryl group(s) is(are) C₆-C₁₀ and the alkyl group is C₁-C₄, non-substituted or substituted by at least one C₁₋C₄ alkyl radical or a C₂-C₁₂ alkenyl radical;
a C₅-C₁₂ monocyclic or bicyclic heteroaryl radical comprising at least one heteroatom chosen from O, N and S,
a C₂-C₁₂ alkenyl radical;
or a C₂-C₁₂ alkynyl radical;
- n, m, p and q are integers comprised between 0 and 200, with 1 < n+m < 200 and 3 < p+q < 10.

3. The method according to claim 1 or 2, **characterized in that** the compound comprising a polysiloxane is in a form of an oil or an oil-in-water emulsion.

4. The method according to claim 3, **characterized in that** said compound comprising a polysiloxane is present in the composition in a ratio of 0.05% to 0.25% by weight to the plaster powder.

5. The method according to any one of claims 1 to 4, **characterized in that** said compound comprising a pregelified starch results from the pregelification of corn starch, wheat starch, potato starch, sweet potato starch, tapioca starch, manioc starch, rice starch, waxy maize starch or mixtures of these, or flours containing them.

6. The method according to any one of claims 1 to 5, **characterized in that** said compound comprising a pregelified starch is present in the composition at a ratio of 0.025% to 2% by weight to plaster powder.

7. The method according to claim 6, **characterized in that** said compound comprising a pregelified starch is present in the composition at a ratio of 0.10% to 1 % by weight to the plaster powder.

8. The method according to any one of claims 1 to 7, **characterized in that** it comprises a step consisting of preparing a mixture based on plaster, water, at least one compound comprising a polysiloxane, and at least one compound comprising a pregelified starch, said compounds being as defined in any one of claims 1 to 7, in order to add the least one compound comprising a polysiloxane and at least one compound comprising a pregelified starch to said plaster-based composition.

9. The method according to any one of claims 1 to 8, **characterized in that** the plaster-based composition also contains at least one additive chosen from a fluidifying agent or dispersant, a foaming agent, a setting retarder, a setting accelerator, a high-temperature anti-shrinkage agent, a binder, a native starch, an adhesive agent, a recalcination inhibitor, wax, a thickening agent, an anti-subsidence agent, a self-leveller, a biocide, a pH adjuster, a colorant, a reinforcing material, a flame retarder or a filler.

10. A waterproofed plaster-based composition, **characterized by** comprising at least one compound comprising a polysiloxane as defined in any one of claims 1 to 4, and at least one compound comprising a pregelified starch as defined in any one of claims 1 or 5 to 7, wherein said compound comprising a polysiloxane is present in the composition in a ratio of 0.01% to 1.5% by weight to plaster powder.

11. The composition according to claim 10, **characterized in that** said compound comprising a polysiloxane is chosen from linear or cyclic hydrogenopolysiloxanes of formulae (I) or (II) below, 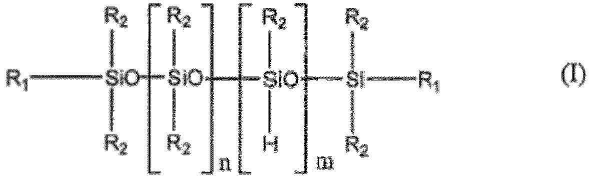 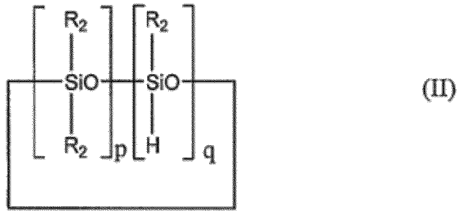 or mixtures of these, in which:
- R₁ and R₂, identical or different, independently represent
a C₁-C₈ linear or branched alkyl radical;
a C₁-C₄ alkoxy radical; a C₃-C₁₀ cycloalkyl radical;
a C₆-C₁₄ monocyclic, bicyclic or tricyclic aryl radical, non-substituted or substituted by at least one C₁-C₄ alkyl radical or a C₂-C₁₂ alkenyl radical;
a monocyclic or bicyclic aralkyl radical in which the aryl group(s) is(are) C₆-C₁₀ and the alkyl group is C₁-C₄, non-substituted or substituted by at least one C₁₋C₄ alkyl radical or a C₂-C₁₂ alkenyl radical;
a C₅-C₁₂ monocyclic or bicyclic heteroaryl radical comprising at least one heteroatom chosen from O, N and S,
a C₂-C₁₂ alkenyl radical; or a C₂-C₁₂ alkynyl radical;
- n, m, p and q are integers comprised between 0 and 200, with 1 < n+m < 200 and 3 < p+q < 10.
and at least one compound comprising a pregelified starch.

12. The composition according to claim 10 or 11, **characterized in that** the compound comprising a pregelified starch is present in the composition in a ratio of 0.025% to 2% by weight to plaster powder.

13. The use of a composition according to any one of claims 10 to 12, for the manufacture of a molded or extruded item, of a plaster block or of a plaster board.

14. A molded item, block or board comprising a waterproofed plaster-based composition, in which said composition comprises at least one compound comprising a polysiloxane and at least one compound comprising a pregelified starch as defined in any one of claims 1 to 7.
